## Europäisches Patentamt
## European Patent Office
## Office européen des brevets

(11) Veröffentlichungsnummer: **0 143 300**
**B1**

(12) **EUROPÄISCHE PATENTSCHRIFT**

(45) Veröffentlichungstag der Patentschrift:
**12.08.87**

(51) Int. Cl.⁴: **H 01 M 8/20,** H 01 M 8/24,
H 01 M 4/90, H 01 M 4/96

(21) Anmeldenummer: **84112410.0**

(22) Anmeldetag: **15.10.84**

(54) **Batterie aus Redoxzellen.**

(30) Priorität: **25.10.83 DE 3338724**

(43) Veröffentlichungstag der Anmeldung:
**05.06.85 Patentblatt 85/23**

(45) Bekanntmachung des Hinweises auf die Patenterteilung:
**12.08.87 Patentblatt 87/33**

(84) Benannte Vertragsstaaten:
**AT BE CH DE FR GB IT LI LU NL SE**

(56) Entgegenhaltungen:
**US-A-4 119 770**
**US-A-4 192 910**

**SIEMENS FORSCHUNGS- UND ENTWICKLUNGSBERICHTE, Band 12, Nr. 2, 1983, Berlin, H. CNOBLOCH et al. "Redox Ion Flow Cell for Solar Energy Storage", Seiten 79-84**

(73) Patentinhaber: **Siemens Aktiengesellschaft Berlin und München, Wittelsbacherplatz 2, D-8000 München 2 (DE)**

(72) Erfinder: **Nischik, Herbert, Dipl.- Ing., Friedrich- Bauer- Strasse 3, D-8520 Erlangen (DE)**
Erfinder: **Pantel, Kurt, Haupstrasse 21b, D-8501 Heroldsberg (DE)**

## Beschreibung

Die Erfindung betrifft eine Batterie aus in bipolarer Weise in Serie geschalteten Redoxzellen mit jeweils zwei voneinander durch eine Membran getrennten Elektrodenräumen.

Redoxzellen sind ein relativ neuer Typ zur Speicherung elektrischer Energie (siehe beispielsweise: "Siemens Forsch.- u. Entwickl.- Ber." Bd.12, 1983, Nr. 2, Seiten 79 bis 84). In diesen Zellen dienen zur Energiespeicherung Lösungen von Metallionenpaaren mit unterschiedlichem Oxidationszustand. Wenn zwei derartige Ionenpaare, deren Redoxpotentiale genügend weit auseinanderliegen, an zwei verschiedenen Elektroden, die durch eine Membran getrennt sind, zur Reaktion gebracht werden, so erhält man eine Spannung. Redoxpaare dieser Art sind beispielsweise $Fe^{2+}/Fe^{3+}$ und $Cr^{2+}/Cr^{3+}$.

In Redoxzellen vom Typ $Fe^{2+}/Fe^{3+}$ - $Cr^{2+}/Cr^{3+}$ laufen folgende Reaktionen ab:

An der positiven Elektrode: $Fe^{2+}$

$$\underset{\textbf{entladen}}{\overset{\textbf{laden}}{\rightleftharpoons}}$$

$Fe^{3+} + e^-$;
an der negativen Elektrode: $Cr^{3+} + e^-$

$$\underset{\textbf{entladen}}{\overset{\textbf{laden}}{\rightleftharpoons}}$$

$Cr^{2+}$.
Die Gesamtreaktion lautet somit:
$Fe^{2+} + Cr^{3+}$

$$\underset{\textbf{entladen}}{\overset{\textbf{laden}}{\rightleftharpoons}}$$

$Fe^{3+} + Cr^{2+}$.

Redoxzellen werden im allgemeinen mit stark sauren Lösungen, beispielsweise von $FeCl_2$ und $CrCl_3$, betrieben, weil dabei die höchsten Stromdichten erreicht werden. Aufgrund der hohen Säurekonzentration der eingesetzten Lösungen, beispielsweise von 3 mol/l, steht dann aber nur eine beschränkte Auswahl an Werkstoffen zur Verfügung, insbesondere bei den Bauteilen, die mit der positiven Elektrode in Kontakt kommen.

Die sauren Lösungen werden beim Betrieb - innerhalb der einzelnen Zellen - jeweils durch einen zugehörigen Elektrodenraum, der auch als Elektrolytraum bezeichnet wird, geleitet. Die beiden Elektrolyt- bzw. Elektrodenräume einer Zelle, die Elektroden unterschiedlicher Polarität enthalten, d.h. ein Elektrodenraum enthält die positive Elektrode und der andere die negative Elektrode, sind durch eine Membran voneinander getrennt. Diese Membran, die einen möglichst niedrigen elektrischen Widerstand aufweisen soll, hat die Aufgabe, eine Diffusion der Metallionen von einem Elektrolytraum in den anderen zu unterbinden.

Zur Erhöhung der Spannung werden, wie in der Batterietechnik allgemein üblich, mehrere Redoxzellen elektrisch In Serie geschaltet. Der Aufbau einer Batterie kann dabei in bipolarer Weise erfolgen, d.h. die Elektroden werden, beispielsweise nach der Filterpressentechnik, in der Weise angeordnet, daß jeweils Elektroden unterschiedlicher Polarität verschiedener Zellen nebeneinander zu liegen kommen. Zwischen diesen beiden Elektroden, d.h. zwischen den beiden benachbarten Zellen, wird dabei eine metallische Trennwand, die als Kontaktblech oder bipolare Platte bezeichnet wird, angeordnet (siehe beispielsweise: M.A. Reid und L. M. Thaller "Improvement and Scale-up of the NASA Redox Storage System", DOE/NASA/12726-6, NASA TM-81632, 1981).

Die bipolare Platte (Kontaktblech), die sich jeweils zwischen der positiven Elektrode einer Zelle und der negativen Elektrode der benachbarten Zelle befindet, soll verhindern, daß sich die Lösungen, mit denen diese beiden Elektroden in Berührung stehen, vermischen. Ferner soll die bipolare Platte einen guten elektronischen Kontakt zwischen den beiden benachbarten Zellen bewirken. Im Gegensatz zu den Elektroden, die im allgemeinen porös sind (siehe beispielsweise: US-Patentschrift 4 192 910), müssen die Kontaktbleche deshalb flüssigkeitsdicht sein. Da die Kontaktbleche mit den in Redoxzellen eingesetzten Metallsalzlösungen in Berührung kommen, müssen sie außerdem gegen diese stark sauren Lösungen beständig sein. Die Auswahl an Werkstoffen, die als Kontaktbleche in Frage kommen, ist deshalb beschränkt. Da es sich hierbei außerdem im wesentlichen um Edelmetalle handelt, spielt auch die Kostenfrage eine nicht unerhebliche Rolle.

Aufgabe der Erfindung ist es, eine Batterie aus Redoxzellen derart auszugestalten, daß eine Serienschaltung der einzelnen Zellen in einfacher und kostengünstiger Weise realisiert werden kann.

Dies wird erfindungsgemäß dadurch erreicht, daß die für Elektroden unterschiedlicher Polarität bestimmten Elektrodenräume benachbarter Zellen jeweils nur durch eine flexible nichtporöse Graphitfolie voneinander getrennt sind.

Bei der erfindungsgemäßen Redox-Batterie tritt - im Vergleich zu bislang bekannten Batterien - an die Stelle der Baugruppen aus positiver Elektrode, Kontaktblech und negativer Elektrode jeweils lediglich ein einziges Bauteil, d.h. eine Graphitfolie. Die Zahl der Bauteile wird somit beträchtlich reduziert. Auf diese Weise wird dann nicht nur eine kompakte Bauweise ermöglicht, sondern es ist damit auch eine Gewichtsersparnis verbunden. Außerdem wird eine Kosteneinsparung erzielt.

Die flexible Graphitfolie übernimmt in der erfindungsgemäßen Batterie eine Reihe von Funktionen:

- sie ist auf der einen Seite die positive Elektrode für eine Redoxzelle;
- auf der anderen Seite ist sie die negative Elektrode für die benachbarte Zelle;
- sie verhindert ein Vermischen der beiden Metallsalzlösungen benachbarter Zellen;
- sie sorgt für eine gute elektronische Kontaktierung benachbarter Zellen, womit auf eine (zusätzliche) bipolare Platte verzichtet werden kann.

Die Graphitfolie hat weiter den Vorteil, daß sie katalytisch aktiv ist und somit die in der Batterie ablaufenden elektrochemischen Reaktionen zu katalysieren vermag. Darüber hinaus bietet sie auch die Möglichkeit einer Aktivierung, so daß die katalytische Aktivität für bestimmte Umsetzungen gezielt weiter erhöht werden kann, und zwar auf beiden Seiten der Folie. Aufgrund des flexiblen Charakters eignet sich die Graphitfolie außerdem auch für großflächige Batterien, d.h. beispielsweise für (Elektroden-)Flächen von 400 cm². Dies ist insbesondere bei Graphitplatten nicht der Fall. Derartige Werkstoffe sind nämlich spröde und brüchig und deshalb aus Gründen der mechanischen Stabilität für großflächige Batterien ungeeignet, obwohl sie beispielsweise als Elektrodenmaterial besser geeignet wären, weil sie bessere Kennlinien aufweisen.

Es ist zwar bereits bekannt, in Redoxzellen Graphitfolien als Elektroden zu verwenden (siehe beispielsweise US-Patentschriften 3 996 064 und 4 382 116). Diese Elektroden sind aber stets porös ausgebildet. Beim Aufbau von Batterien aus derartigen Redoxzellen werden dann zwischen den Einzelzellen, wie bereits ausgeführt, bipolare Platten angeordnet.

Als flexible nicht-poröse Graphitfolien werden in der erfindungsgemäßen Batterie vorzugsweise Graphitfolien eingesetzt, die durch Verpressen von Flocken erhalten werden, welche bei der thermischen Zersetzung von Graphiteinlagerungsverbindungen entstehen. Es können beispielsweise aber auch Folien aus mit Kunststoff gebundenem Graphit Verwendung finden, wobei der in diesen Folien enthaltene Kunststoff gegenüber dem in den Redoxzellen der Batterie eingesetzten Elektrolyt beständig sein muß. Als Kunststoff kann deshalb beispielsweise Polyäthylen oder Polypropylen Verwendung finden. Der Graphitanteil in derartigen kunststoffgebundenen Folien wird so hoch gewählt, beispielsweise 80 bis 90 %, daß der elektrische Widerstand nicht zu sehr ansteigt.

Vorzugsweise sind bei der erfindungsgemäßen Redox-Batterie beide Oberflächen der Graphitfolien aktiviert. Durch die Aktivierung wird die Elektrodenoberfläche aufgerauht, wodurch eine Verbesserung der elektrischen Werte erreicht wird. Die Aktivierung kann beispielsweise in der Weise erfolgen, daß die Graphitfolien auf beiden Seiten sandgestrahlt werden. Neben dem Sandstrahlen bietet das Ionenätzen eine weitere Möglichkeit zur Oberflächenvergrößerung. Daneben kommen zur Aktivierung aber auch oxidierende Maßnahmen in Betracht.

In der erfindungsgemäßen Redox-Batterie wird an den positiven Elektroden vorzugsweise eine Eisensalzlösung umgesetzt und an den negativen Elektroden eine Chromsalzlösung. In diesem Fall können die als negative Elektrode fungierenden Seiten der Graphitfolien vorteilhaft durch geeignete Katalysatormaterialien weiter aktiviert werden. Dazu werden die entsprechenden Oberflächen der Graphitfolien insbesondere mit geringen Mengen an Blei und Gold versehen.

Die erfindungsgemäße Redox-Batterie kann zur Energiespeicherung dienen. Sie ist dabei insbesondere zur Speicherung von Sonnenenergie geeignet.

Anhand von Ausführungsbeispielen und einer Figur soll die Erfindung noch näher erläutert werden.

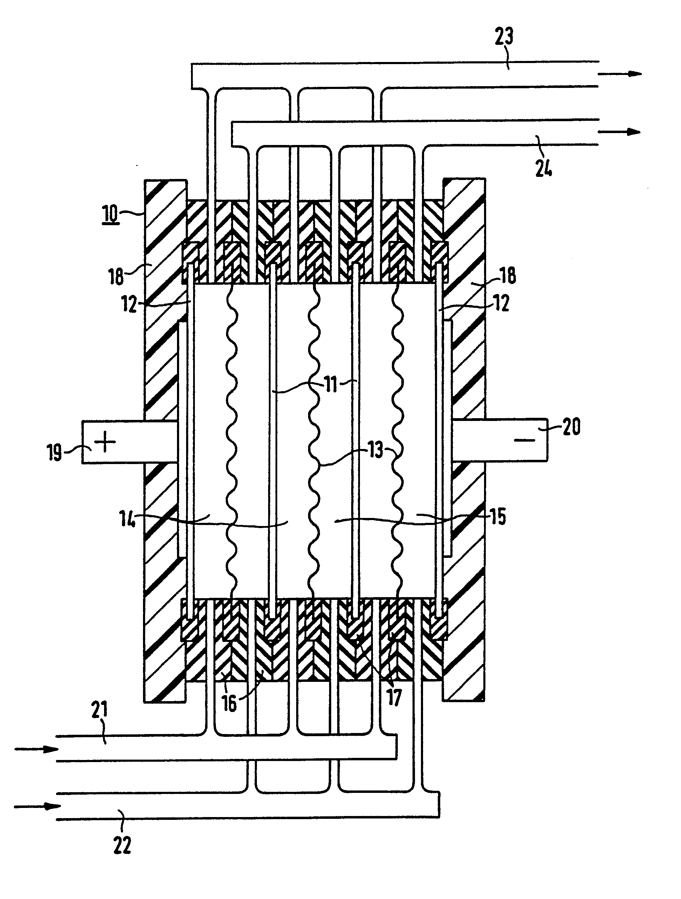

In der Figur ist eine dreizellige Ausführungsform der erfindungsgemäßen Batterie schematisch im Schnitt dargestellt. Die Einzelzellen der Batterie 10 sind durch flexible nicht-poröse Graphitfolien 11 voneinander getrennt. Entsprechende Graphitfolien 12 befinden sich auch an den Batterieenden. Innerhalb der einzelnen Zellen sind Membranen 13 angeordnet, welche die Elektrodenräume 14 bzw. 15 für Elektroden unterschiedlicher Polarität voneinander trennen.

Die Graphitfolien 11 sind auf beiden Seiten aktiviert, d.h. sie arbeiten bipolar, während die Graphitfolien 12 jeweils nur auf einer Seite aktiviert sind, und zwar auf derjenigen Seite, welche einem Elektrodenraum zugewandt ist, d.h. welche die Funktion einer Elektrode besitzt. Die Graphitfolien 11 und 12 sind beispielsweise je 0,8 mm dick; die aktive Fläche der Elektroden beträgt jeweils ca. 50 cm². Die Membranen 13 bestehen vorzugsweise aus perfluorosulfoniertem Polytetrafluoräthylen. Derartige Membranen besitzen beispielsweise einen Flächenwiderstand in 1 M HCl von $0,35\Omega$. cm² und weisen, ebenfalls in 1 M HCl, eine Diffusionsrate für $FeCl_3$ von $1,31 . 10^{-6}$ cm/s und für $CrCl_3$ von $0,67 . 10^{-6}$ cm/s auf.

Die Graphitfolien 11 und 12 sowie die Membranen 13 sind in Zellrahmen 16 angeordnet, die beispielsweise aus Polymethacrylat bestehen. Dichtungen 17, beispielsweise aus einer säurefesten Spachtelmasse, dichten die Graphitfolien und Membranen gegen die Zellrahmen ab. Die gesamte Anordnung wird durch Druckplatten 18 zusammengehalten, die ebenfalls aus Polymethacrylat bestehen können. Die Kontaktierungen 19 und 20 bestehen beispielsweise aus säurebeständigem nichtrostendem Stahl.

Durch Leitungen 21 und 22 werden den Elektrodenräumen die Metallsalzlösungen zugeführt, und zwar mittels - in der Figur nicht dargestellten - Pumpen. Über die Leitung 21 gelangt dabei in die Elektrodenräume 14, welche den positiven Elektroden zugeordnet sind, als Elektrolyt beispielsweise eine wäßrige Eisensalzlösung mit einem Gehalt von 1 mol $FeCl_2$ und 3 mol HCl pro Liter. Den Elektrodenräumen 15, welche den negativen Elektroden zugeordnet sind, wird durch die Leitung 22 - in entsprechender Weise - beispielsweise eine wäßrige Chromsalzlösung mit einem Gehalt von 1 mol $CrCl_3$ und 3 mol HCl pro Liter als Elektrolyt zugeführt. Durch Leitungen 23 und 24 werden die die Elektrodenräume 14 bzw. 15 verlassenden Lösungen jeweils einem - in der Figur ebenfalls nicht dargestellten - Vorratsgefäß zugeführt. Als Schutzgas für die Metallsalzlösungen (in den Vorratsgefäßen) dient im allgemeinen gereinigter Stickstoff. Die Betriebstemperatur (der erfindungsgemäßen Batterie) beträgt vorzugsweise ca. 23° C.

Die Oberflächen der Graphitfolien wurden beispielsweise mit Edelkorund (Korngröße: ca. 250 bis 350 μm) bei einem Druck von 3 bar sandgestrahlt; die Entfernung betrug dabei ca. 30 cm, der Strahldurchmesser etwa 8 cm. Werden die Graphitfolien durch Ionenätzen aktiviert, so erfolgt dies beispielsweise mit Argon. Vorzugsweise wird jedoch ein reaktives Ionenätzen, insbesondere mit Sauerstoff als Reaktionsgas, durchgeführt, beispielsweise unter folgenden Bedingungen: Energiedichte: etwa 4,5 bis 18 $kJ/cm^2$; Arbeitsdruck ($O_2$): 0,5 mbar; Durchflußrate: 0,3 mbar . 1 . $s^{-1}$; Frequenz: 13,56 MHz.

Auf die aktivierten und auch auf die nichtaktivierten Elektroden können zur (weiteren) Verbesserung der Wirksamkeit Katalysatoren aufgebracht werden. Bei den negativen Elektroden sind dies insbesondere katalytische Mengen an Blei oder Blei und Gold. Dazu werden die entsprechenden Oberflächen der Graphitfolien beispielsweise mit Lösungen von Blei(II)-acetat und Tetrachlorogold(III)-säure besprüht, getrocknet und anschließend 3 h in einem Argonstrom auf eine Temperatur von ca. 500° C erhitzt. Auf diese Weise behandelte negative Elektroden weisen beispielsweise einen Gehalt an Blei von ca. 1 $mg/cm^2$ und an Gold von ca. 0,25 $mg/cm^2$ auf. Wird nur Blei verwendet, so ist der Bleigehalt im allgemeinen höher; er beträgt dann beispielsweise etwa 30 $mg/cm^2$.

Eine Batterie mit dem vorstehend geschilderten Aufbau liefert - nach dem Aufladen - bei einer Spannung von 2 V einen Strom von 1,9 A, entsprechend einer Leistung von 3,8 W (Temperatur: 23° C). Nach einer Standzeit von 3 Tagen (unter Schutzgas) wurden einige Punkte der Entladekennlinie überprüft. Dabei ergaben sich keine Abweichungen. Bei der anschließenden vollständigen Entladung der Batterie ergab sich - bei Elektrolytvolumina von jeweils 1 l - eine Kapazität von 29420 As, d.h. 91,5 % des theoretischen Wertes von 32167 As ($\hat{=}$ 96500 As: 3).

## Patentansprüche

1. Batterie aus in bipolarer Weise in Serie geschalteten Redoxzellen mit jeweils zwei voneinander durch eine Membran getrennten Elektrodenräumen, <u>dadurch gekennzeichnet</u>, daß die für Elektroden unterschiedlicher Polarität bestimmten Elektrodenräume benachbarter Zellen jeweils nur durch eine flexible nicht-poröse Graphitfolie voneinander getrennt sind.

2. Batterie nach Anspruch 1, <u>dadurch gekennzeichnet</u>, daß die beiden Oberflächen der Graphitfolie aktiviert sind.

3. Batterie nach Anspruch 1 oder 2, <u>dadurch gekennzeichnet</u>, daß eine Oberfläche der Graphitfolie mit katalytischen Mengen Blei und Gold versehen ist.

## Claims

1. A battery made up of redox cells connected in series in bipolar manner and which each have two electrode chambers separated from one another by a membrane, <u>characterised in</u> that the electrode chambers of adjacent cells, which are intended for electrodes of differing polarities, are in each case separated from one another only by a flexible, non-porous graphite foil.

2. A battery as claimed in Claim 1, <u>characterised in</u> that both the faces of the graphite foil are activated.

3. A battery as claimed in Claim 1 or 2, <u>characterised in</u> that a surface of the graphite foil is provided with catalytic quantities of lead and gold.

## Revendications

1. Batterie constituée de cellules rédox montées en série de manière bipolaire, ayant chacune deux compartiments à électrode séparés l'un de l'autre par une membrane, caractérisée en ce que les compartiments à électrode, destinés à des électrodes de polarités différentes, de deux cellules voisines, ne sont séparés l'un de l'autre que par une feuille en graphite souple,non poreuse.

2. Batterie suivant la revendication 1, caractérisée en ce que les deux surfaces de la feuille en graphite sont activées.

3. Batterie suivant la revendication 1 ou 2, caractérisée en ce qu'une surface de la feuille en graphite est munie de quantités catalytiques de plomb et d'or.